(19) Europäisches Patentamt
European Patent Office
Office européen des brevets

(11) Veröffentlichungsnummer: **0 216 089 B1**

# (12) EUROPÄISCHE PATENTSCHRIFT

(45) Veröffentlichungstag der Patentschrift: **05.12.90**

(21) Anmeldenummer: **86110744.9**

(22) Anmeldetag: **04.08.86**

(51) Int. Cl.$^5$: **C 08 F 222/06,** C 08 F 220/06, C 08 F 220/44, C 14 C 3/22, C 14 C 3/28, C 08 F 8/32 // (C08F222/06, 220:06, 220:44),(C08F220/06, 222:06, 220:44),(C08F220/44, 220:06, 222:06)

## (54) Terpolymerisate.

(30) Priorität: **16.08.85 DE 3529248**

(43) Veröffentlichungstag der Anmeldung: **01.04.87 Patentblatt 87/14**

(45) Bekanntmachung des Hinweises auf die Patenterteilung: **05.12.90 Patentblatt 90/49**

(84) Benannte Vertragsstaaten: **CH DE FR GB IT LI**

(56) Entgegenhaltungen:
**EP-A-0 084 134**
**EP-A-0 106 111**
**US-A-3 635 915**

**CHEMICAL ABSTRACTS, Band 80, Nr. 24, 17. Juni 1974, Seite 76, Zusammenfassung Nr. 134792v, Columbus, Ohio, US; & JP-A-73 27 637**

(73) Patentinhaber: **BAYER AG**
**D-5090 Leverkusen 1 Bayerwerk (DE)**

(72) Erfinder: **Bömer, Bruno, Dr.**
**Max-Planck-Strasse 53**
**D-5060 Bergisch-Gladbach 2 (DE)**
Erfinder: **Schade, Franz, Dr.**
**Steinknippen 3**
**D-5060 Bergisch-Gladbach 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Courier Press, Leamington Spa, England.

**Beschreibung**

Gegenstand der Erfindung sind Terpolymerisate aus 30 bis 75 Gew.-% Maleinsäure(anhydrid), 5 bis 60 Gew.-% (Meth)acrylsäure und 5 bis 40 Gew.-% (Meth)acrylnitril, ihre Herstellung und Verwendung als Nachgerbstoffe für mineralgegerbte Leder sowie sie enthaltende Mittel.

Es ist bereits eine größere Anzahl von Carboxylgruppen enthaltenden Polymeren und Oligomeren als Hilfsstoffe bei Gerbprozessen eingesetzt worden.

So wird in den US—PS 2 205 882 und 2 205 883 die Verwendung von Polyacrylsäure, von Copolymeren aus Acryl- und Methacrylsäure, von Styrol-Maleinsäureanhydrid-Copolymeren, von Polymethacrylsäure, teilweise hydrolysiertem Polymethylmethacrylat sowie von Copolymeren der Methacrylsäure mit Styrol bzw. Methylmethacrylat zum Gerben von Leder beschrieben.

In der DT—OS 2 033 973 wird ein Verfahren zum Füllen von Leder beschrieben, in dem wäßrige Lösungen von gegebenenfalls substituierten homo- oder copolymeren Acrylsäuren zusammen mit Glutinleim eingesetzt werden.

Als Neutralisationsmittel für chromgegerbte Häute werden in der DT—OS 3 005 699 die Alkalisalze von Carboxylgruppen enthaltenden Polymerisaten und/oder Copolymerisaten beansprucht, die sich von Acrylsäure, Methacrylsäure, Maleinsäure, Vinylalkohol, Propenol oder Hydroxyacrylsäure ableiten.

Die EP—A 118 213 beschreibt die Gerbung von Leder mit Copolymeren, die mindestens 60 mol-% Methacrylsäureeinheiten und mindestens 5 mol-% Einheiten mindestens eines ($C_1$—$C_4$)-Alkylacrylates enthalten und ein Gewichtsmittel des Molekulargewichts von 3500 bis 9000 besitzen.

In der DT—OS 3 248 485 wird ein Verfahren zur Nachgerbung von Leder beschrieben, in dem Polymerisate eingesetzt werden, die zu mindestens 10 Gew.-% des Polymerisates aus mit aliphatischen Aminen neutralisierten (Meth)-acrylsäureresten bestehen.

Oligomere auf Acrylbasis, die mit Hilfe von Sulfiten oder Hydrogensulfiten hergestellt wurden und die Molekulargewichte unter 14000 besitzen, werden in der EP—A 61 420 als Nachgerbstoffe für chromgegerbte Leder beansprucht. Die als Gerbstoffe besonders geeigneten "Oligomere" können Strukturelemente von (Meth)acrylnitril, (Meth)acrylamid, N-substituierten (Meth)acrylamiden, (Meth)acrylsäureestern und (Meth)acrylsäure und Vinylestern enthalten. Die Vorschrift A der EP—A 61 420 wurde als Vergleichsbeispiel A nachgearbeitet.

Es wurde nun überraschenderweise gefunden, daß man durch Nachgerbung mineralgegerbter, insbesondere chromgegerbter Leder, mit den erfindungsgemäßen Terpolymerisaten zu Ledern gelangt, die sich durch einen weichen Griff und eine helle Farbe auszeichnen. Ein weiches Leder wird selbst dann erhalten, wenn eine Behandlung mit Weichmachungs- und Fettungsmitteln unterbleibt.

Dagegen trocknen die durch Nachgerbung mit bekannten, Carboxylgruppen enthaltenden Polymerisaten erhaltenen Leder ohne Aufhellung der Lederfarbe hart und fest auf, wenn sie nicht zusätzlich mit Weichmachungs- oder Fettungsmitteln behandelt werden.

Die erfindungsgemäßen Terpolymerisate werden vorzugsweise in Form ihrer ganz oder teilweise neutralisierten wäßrigen Lösungen oder Dispersionen verwendet.

Zur Neutralisation können beliebige alkalisch reagierende Substanzen verwendet werden. Bevorzugt sind Alkalihydroxide, Ammoniak und (Hydroxy)-Alkylamine, beispielsweise solche der Formel

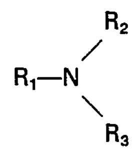

worin

$R_1$, $R_2$ und $R_3$ $C_1$—$C_6$-Alkyl oder durch OH, $NH_2$, Mono- oder Di-$C_1$—$C_4$alkylamino substituiertes $C_2$—$C_6$-Alkyl und

$R_1$ und $R_2$ außerdem Wasserstoff bedeuten.

Ganz besonders bevorzugt wird Ammoniak verwendet.

Bevorzugte Lösungen oder Dispersionen enthalten Terpolymerisate aus 40 bis 70 Gew.-% Maleinsäure(anhydrid), 10 bis 50 Gew.-% (Meth)acrylsäure und 9 bis 40 Gew.-% (Meth)acrylnitril. Von diesen Terpolymerisaten sind diejenigen hervorzuheben, die Acrylsäure und Acrylnitril enthalten.

Besonders bevorzugt sind wegen ihrer Wasserlöslichkeit und nachgerbenden Wirkung Terpolymere, die aus 45 bis 65 Gew.-% Maleinsäure, 15 bis 40 Gew.-% Acrylsäure und 15 bis 35 Gew.-% Acrylnitril hergestellt wurden.

Die gebrauchsfertigen Lösungen haben bevorzugt einen mit Ammoniak eingestellten pH-Wert zwischen 3,5 und 7,0 und insbesondere zwischen 4,5 und 5,5. Soweit die Terpolymerisate klar in Wasser löslich sind, zeigen ihre 40 gew.-%igen wäßrigen Lösungen bei pH-Werten zwischen 3,5 und 7,0 Lösungsviskositäten zwischen 5 mPas und 10,000 mPas, vorzugsweise zwischen 10 und 3000 mPas, besonders bevorzugt zwischen 30 und 1500 mPas.

Die erfindungsgemäßen Terpolymere können nach an sich bekannten Verfahren der radikalischen Polymerisation hergestellt werden. Geeignete Verfahren sind z.B. die Fällungspolymerisation, bei der die Monomeren in einem Fällungsmittel für das Polymer gelöst werden und das gebildete Polymer ausfällt,

oder die Lösungspolymerisation. Besonders bevorzugt ist die Verwendung von Wasser als Polymerisationsmedium. Acrylnitrilreiche Terpolymere sind in Form der freien Säuren in Wasser unlöslich oder nur in der Hitze löslich. Bei teilweiser oder vollständiger Neutralisation gehen sie jedoch weitgehend und meistens vollständig in Lösung. Als Initiatoren zur Auslösung der Polymerisation sind die üblichen Radikalbildner geeignet. Beispielhaft seien genannt: Diacylperoxide wie Dibenzoylperoxid, Perester wie tert.-Butylperpivalat, aliphatische Azoverbindungen wie Azoisobutyronitril, Azo-4-cyan-pentansäure oder andere wasserlösliche aliphatische Azoverbindungen, Salze der Peroxodischwefelsäure oder Wasserstoffperoxid. Verwendet man Wasser als Polymerisationsmedium, so werden zumindest teilweise in Wasser lösliche Initiatoren wie Azoisobutyronitril, Azo-4-cyanpentansäure, Peroxodisulfate oder Wasserstoffperoxid gegebenenfalls in Kombination mit geeigneten Redoxkomponenten bevorzugt. Die Polymerisationstemperatur richtet sich nach der Art der eingesetzten Initiatoren und kann beispielsweise zwischen 20 und 120°C, vorzugsweise zwischen 50 und 110°C liegen.

Die Lösungsviskosität kann durch die Menge des Initiators, die bei Verwendung von Ammoniumpersulfat bei 80 bis 90°C Polymerisationstemperatur, vorzugsweise zwischen 1 und 10 Gew.-%, bezogen auf Monomere, beträgt sowie gegebenenfalls durch zusätzliche Verwendung von molekulargewichtsregelnden Substanzen, wie Mercaptoverbindungen eingestellt werden. Besonders bevorzugt wird die Polymerisation in wäßrigem Medium nach einem Zulaufverfahren durchgeführt.

Die erfindungsgemäßen Terpolymeren können zur Nachgerbung von mineralgegerbten Ledern verschiedenster Art wie Schuhober-, Möbel- und Bekleidungsleder sowohl allein als auch in Kombination mit anderen synthetischen organischen Gerbstoffen, Harzgerbstoffen und Vegetabilgerbstoffen angewendet werden. Besonders geeignet sind sie für die Herstellung weicher Ledertypen wie Softy- und Nappaleder oder entsprechender weißer Leder.

Die Nachgerbung erfolgt nach praxisüblichen Verfahren. Die Anwendungsmenge der Terpolymerisate beträgt bevorzugt 2 bis 8 Gew.-% bezogen auf Falzgewicht des Mineralleders.

Herstellung

In den folgenden Beispielen wurde entmineralisiertes Wasser verwendet. Die Viskositäten der Lösungen bzw. Dispersionen wurden mit einem Rotationsviskosimeter RV 12 der Firma Haake, Berlin, mit der Meßeinrichtung MVE II gemessen. Die Lösungen besitzen keine oder nur eine sehr geringe Strukturviskosität.

Beispiel 1

In einer 2 l-Rührapparatur mit VA-Blattrührer werden 160 ml Wasser vorgelegt. Die Apparatur wird mit $N_2$ gespült und die Vorlage auf 90°C erwärmt. 288 g Maleinsäureanhydrid werden unter Hydrolyse (→341 g Maleinsäure≙64 Gew.-%) in 320 g Wasser bei ca. 40°C gelöst. Nach dem Abkühlen auf ca. 30°C werden 72 g (≙13,5 Gew.-%) Acrylsäure und 120 g (≙22,5 Gew.-%) Acrylnitril zugegeben. Aus 36 g Ammoniumpersulfat und 164 g Wasser wird eine Initiatorlösung hergestellt. Beide Lösungen werden nicht entgast. Die Monomerlösung wird in 3 Stunden, die Initiatorlösung in 4 Stunden bei 90°C gleichzeitig zugetropft. Nach Zugabe der Initiatorlösung wird 2 Stunden unter Rückfluß nachgerührt. Anschließend werden 150 ml Wasser bei Normaldruck abdestilliert. Durch Zugabe von 215 g 25 %iger wäßriger Ammoniaklösung wird der pH auf 4,5 eingestellt. Man erhält 1216 g einer Polymerlösung mit einem Feststoffgehalt von 45,4 Gew.-% und einer Lösungsviskosität von 48 mPas bei 25°C.

Beispiel 2

In der Aparatur von Beispiel 1 werden 200 ml Wasser vorgelegt, entgast und auf 80°C erwärmt. 360 g Maleinsäureanhydrid werden unter Hydrolyse (→426 g Maleinsäure≙58,5 Gew.-%) in 360 ml Wasser gelöst. Nach dem Abkühlen auf ca. 30°C werden 165 g Acrylsäure (≙23 Gew.-%) und 135 g Acrylnitril (≙18,5 Gew.-%) zugegeben. Aus 45 g Ammoniumpersulfat und 205 g Wasser wird eine Initiatorlösung hergestellt. Beide Lösungen werden nicht entgast. Die Monomerlösung wird in 3 Stunden und die Initiatorlösung in 4 Stunden bei 80°C Innentemperatur gleichzeitig zugetropft. Nach Zugabe der Initiatorlösung wird 1 Stunde bei 85°C, 1 Stunde bei 90°C und 2 Stunden unter Rückfluß nachgerührt. 100 ml Wasser werden unter Normaldruck abdestilliert und durch 100 ml frisches Wasser ersetzt. Durch Zugabe von 250 g 25 %iger wäßriger Ammoniaklösung wird der pH auf 3,5 eingestellt. Man erhält 1696 g Polymerlösung mit einem Feststoffgehalt von 45,4 Gew.-% und einer Lösungsviskosität von 107 mPas bei 25°C.

Beispiel 3

Das Beispiel 2 wird mit einer Monomerlösung aus 300 g Maleinsäureanhydrid (→355 g Maleinsäure≙54 Gew.-%), 300 g Wasser, 180 g Acrylsäure (≙27,5 Gew.-%) und 120 g Acrylnitril (≙18,5 Gew.-%) wiederholt. Man erhält nach der Zugabe von 210 g 25 %iger wäßriger Ammoniaklösung 1550 g Polymerlösung mit einem pH-Wert von 3,5, einem Feststoffgehalt von 46,3 Gew.-% und einer Lösungsviskosität von 215 mPas bei 25°C.

Beispiel 4

In der Apparatur von Beispiel 1 werden 160 ml Wasser vorgelegt, entgast und auf 80°C erwärmt. 240 g

Maleinsäureanhydrid werden unter Hydrolyse (→284 g Maleinsäure≙54 Gew.-%) in 320 ml Wasser bei ca. 40°C gelöst und dann bei ca. 30°C mit 96 g Acrylsäure (≙18,5 Gew.-%) und 144 g Acrylnitril (≙27,5 Gew.-%) versetzt. Aus 12 g Ammoniumpersulfat und 250 g Wasser wird die Initiatorlösung hergestellt. Beide Lösungen werden nicht entgast und wie in Beispiel 2 bei 80°C zudosiert und zu Ende polymerisiert. Nach dem Abdestillieren und Ersetzen von 100 ml Wasser wird durch Zugabe von 225 g 25 %iger wäßriger Ammoniaklösung der pH auf 4,7 eingestellt. Man erhält 1267 g einer Terpolymerlösung mit 41,5 Gew.-% Feststoff und einer Lösungsviskosität von 344 mPas.

Beispiele 5—7

In einer 2 l-Rührapparatur mit VA-Blattrührer werden je 200 ml Wasser vorgelegt, entgast und unter Stickstoff zum Sieden erhitzt. Die Monomerlösungen der in der Tabelle angegebenen Zusammensetzung werden wie in Beispiel 1 hergestellt, nicht entgast und in 2 Stunden zur siedenden Vorlage getropft. Eine Initiatorlösung aus 15 g Ammoniumpersulfat in 235 g Wasser wird gleichzeitig durch eine Glaskapillare unter dem Flüssigkeitsspiegel zugepumpt. Es wird eine Stunde unter Rückfluß nachgerührt und anschließend mit 25 %iger wäßriger Ammoniaklösung der pH auf 3,5 gestellt.

| Beispiel | | 5 | 6 | 7 |
|---|---|---|---|---|
| Maleinsäureanhydrid | [g] | 240 | 240 | 240 |
| ≙Maleinsäure | [g] | 284 | 284 | 284 |
| ≙Maleinsäure | [Gew.-%] | 44 | 44 | 44 |
| Wasser | [g] | 300 | 300 | 300 |
| Acrylsäure | [g] | 180 | 240 | 300 |
| =Acrylsäure | [Gew.-%] | 28 | 37 | 46,5 |
| Acrylnitril | [g] | 180 | 120 | 60 |
| =Acrylnitril | [Gew.-%] | 28 | 19 | 9,5 |
| 25 %ige Ammoniaklösung | [g] | 169 | 196 | 217 |
| Ausbeute Terpolymerlösung | [g] | 1489 | 1509 | 1514 |
| Feststoffgehalt | [Gew.-%] | 42,3 | 40,4 | 40,1 |
| Lösungsviskosität bei 25°C | [mPas] | 717 | 717 | 1266 |

Vergleichsbeispiel A

Die Vorschrift A der EP—A 61 420 wird nachgearbeitet, wobei die Innentemperatur bei der Polymerisation durch Eiskühlung auf der vorgeschriebenen Temperatur gehalten wird. Die Lösung des erhaltenen Copolymeren aus 57,5 Gew.-% Acrylsäure und 42,5 Gew.-% Acrylnitril besitzt bei pH 6 einen Feststoffgehalt von 38 Gew.-% und eine Viskosität von 2085 mPas bei 25°C.

Verwendung

In den folgenden Beispielen beziehen sich—wenn nichts anderes angegeben wird—alle Prozentangaben auf das Falzgewicht des Chromleders.

In den folgenden Nachgerbverfahren einschließlich der Vorbehandlungen werden jeweils praxisüblich chromgegerbte und auf 1,6 bis 1,8 mm Stärke gefalzte Rindhautabschnitte im Gerbfaß mit folgenden Zusätzen rotierend gewalkt. Zum Flottenwechsel und zur Chemikalien- und Nachgerbstoffzugabe wird das Gerfaß jeweils kurz angehalten.

| | | Laufzeit |
|---|---|---|
| 1. Waschen: | | |
| | 200% Wasser 50°C | |
| | 0,2% 15 fach ethoxyliertes Nonylphenol | 10 Minuten |
| | Flotte ablassen. | |
| 2. Neutralisation: | | |
| | 100% Wasser 40°C | |
| | 0,5% Calciumformiat | |
| | 0,2% Natriumbicarbonat | 40 Minuten |
| | pH-Wert der Flotte ca. 4,4 | |
| | Bei Bedarf 0,05 bis 1% Natriumbicarbonat nachbessern | 10 Minuten |
| | Flotte ablassen. | |
| 3. Nachgerbung: | | |
| | 100% Wasser 50°C | |
| | 2,5% Feststoff einer nach den Beispielen 1 bis 7 oder A hergestellten Polymerisatlösung, die 1:10 mit Wasser verdünnt wird. | 60 Minuten |
| | pH-Wert der Flotte am Ende der Nachgerbung 3,7 bis 4,5. | |
| 4. Waschen: | | |
| | 200% Wasser 50°C | 10 Minuten |
| | Flotte ablassen und Leder 5 Minuten in fließendem kalten Wasser spülen. | |
| | Leder über Nacht hängend trocknen. | |

Die erhaltenen Leder besitzen die in folgender Tabelle angegebenen Eigenschaften.

Die Zahlenwerte unter Weichheit/Griff bedeuten Abstufungen von 1=weich und griffig bis 5=hart und rauh wie ohne Nachgerbung aufgetrocknetes Leder.

Bei Weißeffekt entspricht 1=deutlich aufgehellte Lederfarbe und 5=keine Aufhellung wie ohne Nachgerbung aufgetrocknetes Leder. Diese Beurteilung basiert auf mehreren voneinander unabhängig durchgeführten Nachgerbesieren mit gleicher Produktauswahl.

Zum Vergleich wird jeweils ein Chromlederabschnitt ohne Nachgerbstoff-Behandlung, im übrigen aber wie die übrigen Versuchsleder behandelt, herangezogen.

TABELLE

| Nachgerbung mit Terpolymerisat aus Beispiel | Weichheit/-Griff | Aufhellung |
|---|---|---|
| 1 | 3 | 2 |
| 2 | 2—3 | 1—2 |
| 3 | 2 | 1—2 |
| 4 | 2 | 1—2 |
| 5 | 2 | 2 |
| 6 | 3 | 2 |
| 7 | 3 | 3 |
| A | 5 | 5 |
| ohne Polymerisatnachgerbung | 5 | 5 |

Daraus folgt, daß das mit dem Copolymeren aus Vergleichsbeispiel A nachgegerbte Chromleder in Weichheit und Griff sowie Aufhellung der Lederfarbe sich nur unwesentlich vom Vergleichsleder ohne Nachgerbung unterscheidet. Im Vergleich dazu sind die mit Terpolymeren nach den Beispielen 1 bis 7 nachgegerbten Leder deutlich besser in Weichheit und Griff sowie Aufhellwirkung bzw. Weißeffekt.

**Patentansprüche**

1. Terpolymerisate aus 30 bis 75 Gew.-% Maleinsäure(anhydrid), 5 bis 60 Gew.-% (Meth)acrylsäure und 5 bis 40 Gew.-% (Meth)acrylnitril.

2. Terpolymerisate nach Anspruch 1 aus 45 bis 65 Gew.-% Maleinsäure, 15 bis 40 Gew.-% Acrylsäure und 15 bis 35 Gew.-% Acrylnitril.

3. Terpolymerisate nach Ansprüchen 1 und 2, dadurch gekennzeichnet, daß sie in ganz oder teilweise neutralisierter wäßriger Lösung oder Suspension vorliegen.

4. Terpolymerisate nach Anspruch 3, dadurch gekennzeichnet, daß sie in mit Alkalihydroxid, Ammoniak oder einem Amin der Formel

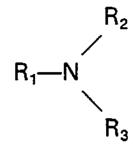

worin

$R_1$, $R_2$ und $R_3$ $C_1$—$C_6$-Alkyl oder durch OH, $NH_2$, Monooder Di-$C_1$—$C_4$alkylamino substituiertes $C_2$—$C_6$-Alkyl und

$R_1$ und $R_2$ außerdem Wasserstoff bedeuten,

ganz oder teilweise neutralisierter Form vorliegen.

5. Terpolymerisate nach Anspruch 3, dadurch gekennzeichnet, daß sie einen mit Ammoniak eingestellten pH-Wert zwischen 3,5 und 7,0 besitzen.

6. Verfahren zur Herstellung der Terpolymerisate des Anspruchs 1, dadurch gekennzeichnet, daß man eine Monomermischung aus 30 bis 75 Gew.-% Maleinsäure, 5 bis 60 Gew.-% Acrylsäure und 5 bis 40 Gew.-% Acrylnitril polymerisiert.

7. Verfahren nach Anspruch 6, dadurch gekennzeichnet, daß man in wäßrigem Medium nach einem Zulaufverfahren radikalisch polymerisiert.

8. Verfahren zum Nachgerben mineralgegerbter Leder, dadurch gekennzeichnet, daß man Terpolymerisate des Anspruchs 1 verwendet.

9. Mittel zum Nachgerben mineralgegerbter Leder, dadurch gekennzeichnet, daß sie Terpolymerisate des Anspruchs 1 enthalten.

**Revendications**

1. Terpolymérisats constitués de 30 à 75% en poids d'acide (anhydride) maléique, 5 à 60% en poids d'acide (méth)acrylique et 5 à 40% en poids de (méth)acrylonitrile.

2. Terpolymérisats suivant la revendication 1, constitués de 45 à 65% en poids d'acide maléique, 15 à 40% en poids d'acide acrylique et 15 à 35% en poids d'acrylonitrile.

3. Terpolymérisats suivant les revendications 1 et 2, caractérisés en ce qu'ils se présentent en solution ou en suspension aqueuse entièrement ou partiellement neutralisée.

4. Terpolymérisats suivant la revendication 3, caractérisés en ce qu'ils se présentent sous une forme totalement ou partiellement neutralisée avec un hydroxyde alcalin, de l'ammoniac où une amine de formule

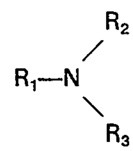

dans laquelle

$R_1$, $R_2$ et $R_3$ représentent un groupe alkyle en $C_1$ à $C_6$ ou un groupe alkyle en $C_2$ à $C_6$ substitué par un radical OH, $NH_2$, mono- ou di(alkyle en $C_1$ à $C_4$)-amino et

$R_1$ et $R_2$ représentent en outre l'hydrogène.

5. Terpolymérisats suivant la revendication 3, caractérisés en ce qu'ils ont une valeur de pH, ajusté avec l'ammoniac, comprise entre 3,5 et 7,0.

6. Procédé de préparation des terpolymérisats suivant la revendication 1, caractérisé en ce qu'on polymérise un mélange de monomères constitué de 30 à 75% en poids d'acide maléique, 5 à 60% en poids d'acide acrylique et 5 à 40% en poids d'acrylonitrile.

7. Procédé suivant la revendication 6, caractérisé en ce qu'on effectue une polymérisation radicalaire en milieu aqueux selon un procédé d'amenée.

8. Procédé de retannage de cuir tanné au minéral, caractérisé en ce qu'on utilise des terpolymérisats suivant la revendication 1.

9. Compositions destinées au retannage de cuir tanné au minéral, caractérisées en ce qu'elles contiennent des terpolymérisats suivant la revendication 1.

**Claims**

1. Terpolymers of 30 to 75% by weight of maleic acid (anhydride), 5 to 60% by weight of (meth)acrylic acid and 5 to 40% by weight of (meth)acrylonitrile.

2. Terpolymers according to Claim 1 of 45 to 65% by weight of maleic acid, 15 to 40% by weight of acrylic acid and 15 to 35% by weight of acrylonitrile.

3. Terpolymers according to Claims 1 and 2, characterized in that they are in the form of completely or partly neutralized aqueous solution or suspension.

4. Terpolymers according to Claim 3, characterized in that they are in a form completely or partly neutralized with an alkali metal hydroxide, ammonia or an amine of the formula

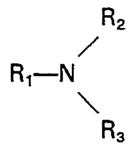

wherein

$R_1$, $R_2$ and $R_3$ denote $C_1$—$C_6$-alkyl or $C_2$—$C_6$-alkyl which is substituted by OH, $NH_2$ or mono- or di-$C_1$—$C_4$alkylamino and $R_1$ and $R_2$ also denote hydrogen.

5. Terpolymers according to Claim 3, characterized in that they have a pH, established with ammonia, of between 3.5 and 7.0.

6. Process for the preparation of the terpolymers of Claim 1, characterized in that a monomer mixture of 30 to 75% by weight of maleic acid, 5 to 60% by weight of acrylic acid and 5 to 40% by weight of acrylonitrile is polymerized.

7. Process according to Claim 6, characterized in that free radical polymerization is carried out in an aqueous medium by a feed process.

8. Process for retanning mineral-tanned leather, characterized in that terpolymers of Claim 1 are used.

9. Agents for retanning mineral-tanned leather, characterized in that they contain terpolymers of Claim 1.